# EUROPEAN PATENT SPECIFICATION

(11) **EP 2 328 408 B1**
(45) Date of publication and mention of the grant of the patent: **19.12.2012**
(21) Application number: 09772276.3
(22) Date of filing: 09.06.2009
(51) Int. Cl.: A01M 29/24, A01K 13/00, A01K 15/02

(54) **A DEVICE FOR AFFECTING A BEHAVIOUR OF A LIVING BEING**
VORRICHTUNG ZUR BEEINFLUSSUNG DES VERHALTENS EINES LEBEWESENS
DISPOSITIF POUR AFFECTER LE COMPORTEMENT D'UN ÊTRE VIVANT

(30) Priority: 09.06.2008 WO PCT/EP2008/057143; 19.03.2009 DK 200900385
(43) Date of publication of application: 08.06.2011
(73) Proprietor: Pinaldo A/S, 2950 Vedbaek (DK)
(72) Inventor: THORKELIN, Simon, 2950 Vedbæk (DK)
(74) Representative: Inspicos A/S
(86) International application number: PCT/EP2009/057094
(87) International publication number: WO 2010/000576

(56) References cited:
- WO-A-01/30138
- WO-A-2007/010282
- GB-A- 2 206 906
- US-A- 2 473 183
- US-A- 5 023 433
- US-A- 5 049 704
- US-A- 5 107 620
- US-A1- 2002 092 481
- US-B1- 6 519 131
- US-B1- 6 817 138

## Description

### INTRODUCTION

The present invention relates to a device for affecting behaviour of a living being by use of electricity.

### BACKGROUND OF THE INVENTION

It is a well-known problem that some animals bite or kick at specific areas in their cage or box. As an example, horses often kick with their forelegs during feeding of the animal or kick the walls of the box at certain locations e.g. for demonstrating strength towards rivals etc. In this way, a horse eating from a trough hanging on a wall may kick at the part of the wall situated below the trough. Apart from being a nuisance, this behaviour of a horse may harm the legs of the horse, as well as it may cause damage to the wall of the stable and disturb others in the stable.

In a similar manner, other behaviours of a living being may include repetitive activities which, in one or the other way, are a nuisance or damaging. Examples include the habit of dogs or other pets to relieve themselves at undesired locations, the habit of taking a short cut across areas with prohibited access, the habit of climbing trees which may thereby be damaged, the habit of mice and rats to enter ships along a mooring line or gangway, or the habit of living beings to escape from a cage or closed area whenever an entranceway is opened.

WO 98/20729 discloses a method of inhibiting an animal from biting the wood structure of a stable or wooden fence. The method comprises embedding in lengths of the wood a thin metal wire connected to an earthed return voltage source to produce an electric voltage, so that when the electrical circuit is earthed through the mouth of the animal, a weak electrical current flows through the circuit.

US 6,519,131 discloses a cattle guard arranged on the ground for preventing access to a specific area, WO 01/30138 is concerned with prevention of insects in a building and comprises a frame to be inserted e.g. in a window opening.

GB 686,476 shows an example of an electric fence.

US 6,000,364 discloses a training device for allowing horses to trot around an enclosed course with side walls. A driving element, which is rotatable around the course, is formed by a number of flexible rod elements, a first end of which is attached to an arm and a second end of which hangs free above the course. When rotating the driving element, the rod elements will contact the rear of the horses, thereby encouraging them to move in forward direction. The rod elements may be provided with electrically conducting means.

### DESCRIPTION OF THE INVENTION

The object of the present invention is to provide simple and reliable means for affecting the behaviour of a living being. It is a further object of the invention to provide a device which interferes with the behaviour of the living being while simultaneously protecting the living being against injury, or the environment against noise or damage.

In view of this object, the present invention, in a first aspect, provides a device according to claim 1. Since the second layer is electrically conductive, it may carry an electrical charge and an individual coming into contact with an outer surface of the second layer can therefore get an electrical shock as the layer may then carry an electrical current through the body of the individual.

Due to the wall bracket, the blank can be suspended on a wall, and the device may therefore be used for changing the behaviour of an animal which kicks against the wall. This behaviour is known e.g. from horses which typically kicks below the feeding trough and thereby potentially injure the wall or themselves.

In this connection, "electrically isolating" means that the first layer is capable of sustaining the electrical voltage of the second layer to prevent an electrical current from the second layer through the first layer.

The blank can be arranged anywhere in the surroundings of the living being.

When the blank is in place, the first layer may support the blank against adjacent objects such as walls of a cage, the edge of a sidewalk, an outer surface of a tree, the gangway of a ship etc and the second layer may carry an electrical charge and current so that the living being, upon contact with the second layer, may experience an electrical shock urging the individual to stop the undesired activity.

The blank could have any shape and size. In one embodiment, the blank has a quadrangular shape with lengths of the sides being e.g. between 30 and 180 centimetre. In another example, the blank is oval or circular e.g. with a diameter between 30 and 180 centimetre.

The blank may comprise any number of additional layers of either conductive or non conductive material.

An additional layer of a non conductive material may e.g. cover a portion of the second layer and thereby enable the blank to be gripped without coming in contact with the second layer or other electrically charged layers.

An additional layer of a conductive material may e.g. be provided for carrying a charge which is different from that of the second layer. For that reason, additional layers of a conductive material could be electrically isolated from the second layer.

An additional layer of a conductive material may e.g. be an additional ground layer being connected to ground, or an additional electrical layer having conductive properties enabling the electrical layer to carry an electrical charge or current which could provide a more powerful or less powerful electrical shock than that of the second layer.

The blank may have an outer surface comprising at least two surface portions formed by the second layer in combination with one or more of the additional layers, and an opposite inner surface comprising a surface portion formed by the first layer.

In one embodiment, the additional ground layer and/or the additional electrical layer is/are arranged so that these layers, together with the second layer form a common outer surface of the blank. In this case, the blank can be arranged so that this common surface, under normal circumstances, faces the living being in question. If the living being comes in contact with the surface, it will be influenced by one or more of the three layers, i.e. the second layer, the electrical layer, or the ground layer. If e.g. the individual touches one of the electrical and second layers and simultaneously touches the ground layer, an electrical current may run through the individual from the electrically charged to the grounded layer.

One or more additional layers which carry a charge or current different from that of the second layer may be used for providing different levels of the pain which is experienced depending on where the contact with the blank is made.

As an example, an animal which kicks below the feeding trough may get into contact with the second layer of the blank whereby the animal will experience an electrical shock urging the animal to stop kicking immediately. In such a case, the animal may completely stop the behaviour of kicking after having been into contact with the electric current just a few times.

As another example, a passage may be blocked by a blank comprising an additional layer adapted to carry a charge or current which is different from that of the second layer. A living being trying to cross such a passage may experience, in the beginning, a weak pain, which is then intensified upon contact with another blank which is arranged further along the passage.

As a specific example, the blank may be arranged on the freeboard or gangway of a ship to thereby prevent unauthorised entering of the ships, e.g. for the purpose of theft protection or for preventing mice and rats to enter the ship. The blank could also be made of a soft cloth material which can be wrapped or wound around mooring lines etc to prevent entrance of the ship.

In an embodiment, the wall bracket holds an upper part of the blank . In this connection, the upper part may e.g. be directly at an upper edge of the blank or it may be at an area between one to ten centimetres from the upper edge.

The bracket may include a U shaped profile or profiles of other shapes, and it may hold the blank e.g. by engaging the surface of the upper part of the blank or by adhesively bonding to the blank.

In one embodiment, an edge of the blank forms a bead which matches a corresponding groove formed in the bracket so that the blank and bead can be pushed sideways into the groove. The groove is formed so that an inner cavity can contain the bead, and a longitudinal slot into the inner cavity is dimensioned with regards to the thickness of the blank such that the blank can extend from the bracket through the slot while the dimension of the bead prevents the bead from escaping the inner cavity through the slot. In this embodiment, the blank can be suspended without piercing or in other ways damaging the blank.

To prevent electrical charging of the bracket via the second layer of the blank, the bracket may be made from a. non-conductive material, or it may at least include a portion which can be gripped by an individual without causing the electricity to affect that individual.

In one embodiment, at least a portion of the blank has a non conductive surface so that this portion can be gripped by an individual without causing electrical shock. In particular, that non-conductive portion could be the above mentioned upper portion of the blank where the bracket can be fixed. The non conductive surface can be made by providing the non conductive portion entirely from a non conductive material or by coating the second layer with a non conductive material so that the conductive material of the second layer becomes encapsulated in a non conductive material.

The wall bracket may be adapted to maintain an upper area of the blank at a distance from a wall. By suspending the blank at a distance from the wall, the living being, e.g. a horse, may hit or kick against the blank and thereby obtain the behaviour affecting electrical shock even without hitting the wall against which the attack is directed. In this way, the wall may be protected better, the noise level in the stable can be reduced, and limps, e.g. the leg of the horse, can be protected better against injuries upon contact with the wall.

In an embodiment, the blank is made from a flexible and elastically deformable material, such as rubber or plastic material or a synthetic material having similar properties, e.g. with respect to elastic deformation. The blank may thereby dampen noise and impact upon contact with a living being, e.g. if a horse kicks directly at the blank. As already mentioned with respect to a specific example, the blank may also be soft and bendable, e.g. with a rigidity similar to that of cloth or foils of a film material. The blank may even have an elasticity corresponding to that of clingwrap or thrinkwrap etc. so that the blank can be stretched over an object to be protected thereby.

The blank may in particular have a soft or resilient surface at least on that side facing the living being in the intended use. As an example, an outer surface of the blank, and in particular an outer surface of the second layer, may include a dampening structure with air filled bubbles, soft cloth or textile structure or similar smooth and protective texture.

The electrical conductivity of the second layer and the ability of the second layer to provide an electrical shock to the individual coming in contact with this layer may be obtained in various ways. Generally, the conductivity may be provided continuously over an outer surface of the second layer or it may be provided discontinuously over the outer surface of the second layer.

By continuous distribution is meant that the outer surface is conductive irrespective where the individual comes in contact with the surface and by discontinuous is meant that the outer surface comprises conductive areas and non conductive areas so that an individual may come in contact with a non conductive area if the individual is careful where to touch the surface.

If the conductivity is of the discontinuous kind, the surface may include a coding indicating where the surface is conductive and where it is not conductive, the coding may include different colours, textures, surface patterns etc.

The discontinuous conductivity may, as an example, be provided by one or more electrically conductive and un-isolated wires bonded to the blank, e.g. a single wire arranged in a meandering pattern or a plurality of wires arranged adjacently over the outer surface of the blank.

The continuous conductivity may, as an example, be provided by a foil of an electrically conductive material attached to the surface of the blank. Alternatively, the blank may comprise a second layer made from a rubber material or similar soft, resilient and elastically deformable material which has been made electrically conductive e.g. by providing carbon or metal elements in the rubber material.

In particular with respect to the continuous conductivity, it may be beneficial that the surface may be penetrated or damaged essentially without changing the conductivity of the second layer of the blank as such and therefore without changing the ability of the remaining surface to provide an electrical shock to the individual coming in contact with the surface. In that way, the blank may be suspended on a wall, a tree, a ship or elsewhere simply by use of nails, screws, rivets and similar well known fastening means. The device may, for this purpose include a number of such fasteners which are made from a non conductive material or at least which is coated with a non conductive material so that the user may hang the blank on a wall without establishing conductivity between the wall or tree and the second, conductive, layer of the blank.

In an embodiment, the device comprises an energizer adapted to generate high voltage impulses between a first and a second output terminal, the first output terminal is electrically connected or easily connectable to at least the conductive part of the blank, the second output terminal being connected or connectable to ground. For connecting the second output terminal to ground, the device may include a spear or similar element which is suitable for being driven into the ground.

The blank could be made e.g. from SBR-rubber with a hardness of 65 Shore A, or similar rubber material, e.g. comprising Polyethylene etc.

The energizer could be a standard energizer, e.g. of the kind produced by Gallagher, c.f. e.g. www.Gallagherusa.com. Such energizers exist e.g. in grid powered, battery powered and solar powered versions.

In one embodiment, the second layer is made throughout from an electrically conductive material and comprises a surface pattern, e.g. including protrusions and depression, e.g. circular protrusions. The surface pattern may improve the effect by increasing the surface pressure between the blank and the living being when the living being comes in contact with the surface of the blank.

In one embodiment, both layers of the layered structure are electrically conductive so that the blank can be suspended freely and thereby provide an effect by contact from both sides thereof.

The present invention further relates to a box or cage for housing a living being, e.g. a horse stable, wherein the device is mounted on a wall or on the floor in the cage, e.g. under a feeding trough. Thereby, the above discussed effects may be obtained, and a bad habit with respect to kicking against the walls of the cage may be stopped, or the cage may remain open with the device arranged on the floor across the open passage into or out of the cage. The last mentioned feature will effectively prevent escape from the cage and simultaneously provide free access to the cage for a person or living being having suitably electrically isolating footwear.

In another aspect, the present invention relates to a method of affecting a behaviour of a living being, the method comprising the step of providing a blank according to claim 1, arranging the blank in a habitation of the living being by suspension, and connecting the blank to an energizer for providing an electrically charged surface of the blank.

Even though the blank in question may have only one single layer which is electrically conductive and which may therefore e.g. be suspended freely in a room where it can provide an electrical shock upon contact with either one of the sides, it may be an advantage, if the blank has a layered structure as described relative to the first aspect of the invention.

The method may e.g. include that the blank is provided on a surface in an area below a feeding trough, e.g. of a horse stable, in order to prevent the animal from wall kicking.

The present invention further relates to a method of affecting the behaviour of animals during transport of the animals. According to this method, a blank of the described kind is suspended on a wall or arranged on the floor in a transport cage for the animal.

The present invention further relates to a method of protecting trees or agricultural products by use of a device as described above, where the blank is wrapped around the tree and thereby protects against animals trying to climb the tree or eat from the tree, or where the blank is arranged around the agricultural products to prevent living beings from getting access to the products.

### DETAILED DESCRIPTION OF EMBODIMENTS

Embodiments of the invention will now be explained in further details with reference to the drawing, in which:
Fig. 1 illustrates a device according to the invention when suspended on a wall;
Figs. 2-4 illustrate details of a suspension bracket for suspending the blank on a wall;
Fig. 5 illustrates a blank and an energizer ;
Fig. 6 illustrates an exploded view of the blank according to the invention; and
Figs. 7-8 illustrate different embodiments of the device according to the invention.

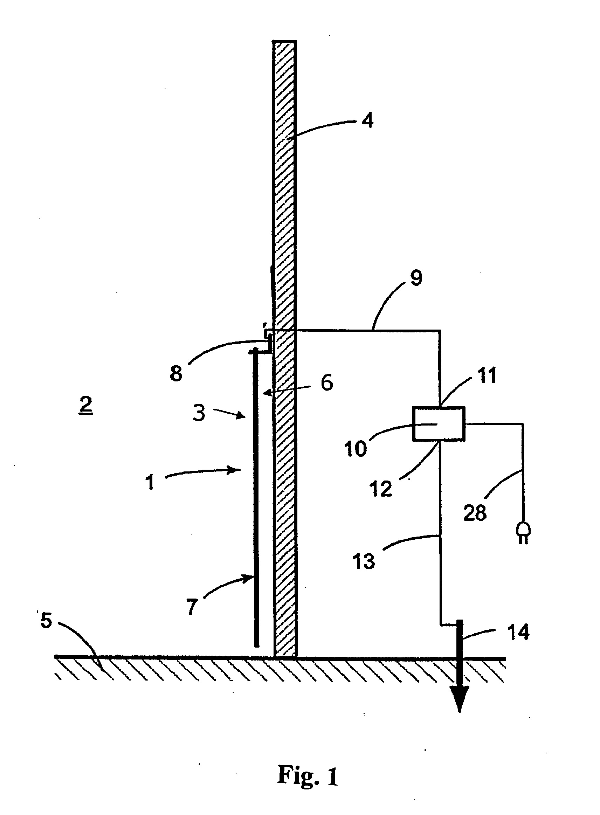

Fig. 1 shows a device 1 according to the invention, installed in a box or room 2, e.g. a horse stable. The device 1 comprises a blank 3 which is suspended on the wall 4 at a distance from a floor 5. The inner surface 6 is not conductive and therefore protects against short circuiting of the blank against the wall, water pipes, or other elements which may form part of the room 2. The opposite outer surface 7 is adapted to carry an electrical charge so that a living being in the box will get an electrical shock upon contact with this surface.

The blank 3 is suspended on the wall 4 by use of a bracket 8 which is nailed into the wall. The wall bracket 8 provides a distance between the inner surface 6 of the blank 3 and the wall 4.

The electrical charging of the outer surface 7 is provided via the connector 9 from the energizer 10. The energizer 10 is connected to a wall plug (not shown) by means of a power cord 28 and is adapted to generate high voltage impulses between a first output terminal 11 and a second output terminal 12. The first output terminal 11 is connected to the blank 3 through the first electric wire 9, and the second output terminal 12 is grounded via a second electric wire 13 connected to an earth spear 14 extending through the floor 5 into the ground.

In the illustrated setup, the blank 3 may interfere with the behaviour e.g. of a horse which kicks against the wall of its stable. In this case, the blank can be suspended e.g. on a wall part below a feeding trough.

When the living being comes in contact with the outer surface 7, it will feel an unpleasant muscle contraction as a result of en electric current travelling through its body. The electric circuit is connected from the first terminal 11 to the second terminal 12 of the energizer 10 through the first electric wire 9, the wall bracket 8, the blank 3, the not shown body of the living being, the floor 5 and/or the ground under the floor, the earth spear 14 and eventually the second electric wire 13.

The electric impulse generated by the energizer 10 is typically very brief and may be repeated, for instance, every 1 to 2 seconds.

As most animals, such as horses, are well covered with an electrically insulating hair layer, a relatively high voltage is required, such as 700 volts or more, depending on the living being in question. However, as the duration of the electrical shock is short, no harm is caused to the animal.

The blank 3 may, likewise, be placed on the floor, e.g. across an entrance into the room. In this way, the blank may serve to control entrance and exit to and from the room.

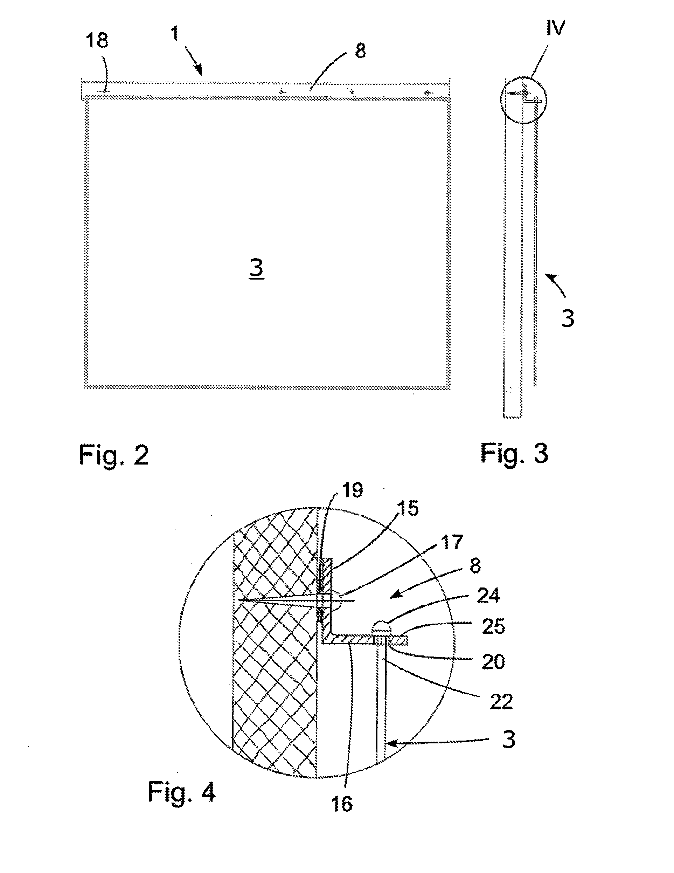

Figs. 2 to 4 illustrate details of the suspension of the blank in the room.

The wall bracket 8 has the form of a substantially horizontally extending mounting bracket made of electrically conductive material, such as metal, and having an L-formed cross-section with a first leg 15 and a second leg 16, see Fig. 4. The first leg 15 is mounted against the wall 4 by means of screws 17 or similar fastening means. The fastening means are inserted through mounting holes 18. The wall bracket 8 is insulated from the wall 4 by means of intermediate electrically insulating rings 19 placed around each screw 17. This insulation is provided in order to ensure that the electric circuit is not short circuited through the wall 4 to the floor 5. The second leg 16 has a number of through holes 20 through which the blank 3 can be fixed by fastening means 24 such as rivets, bolts etc. In this way, the fasting means 24 can be used to transfer the electrical charge from the bracket 8 to the blank 3. The top portion 22 of the blank 3 may comprise any kind of attachment structure known in the art for joining with the fastening means 24. As an example, the fastening means 24 may comprise hooks which engage holes or openings in the top portion 22 of the blank 3 or the blank 3 may comprise internally threaded holes extending from the edge and being adapted to receive fastening means such as bolts etc.

In an alternative embodiment, the bracket 8 is not conductive, and the wire 9 from the energizer 10 is connected directly to the blank 3.

Flexibility of the blank 3 and/or a smooth or soft outer surface may be provided to protect the living being from being scratched by contact with the blank 3.

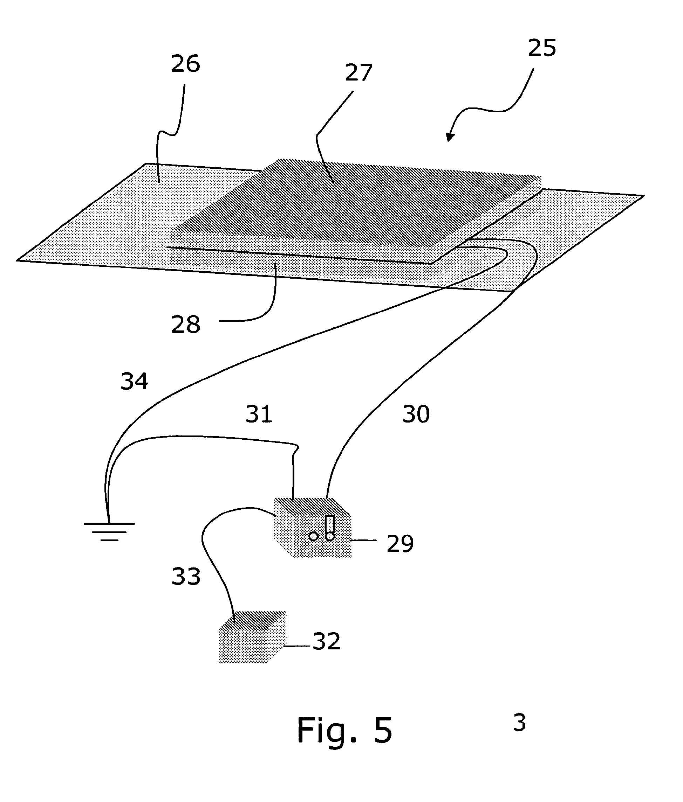

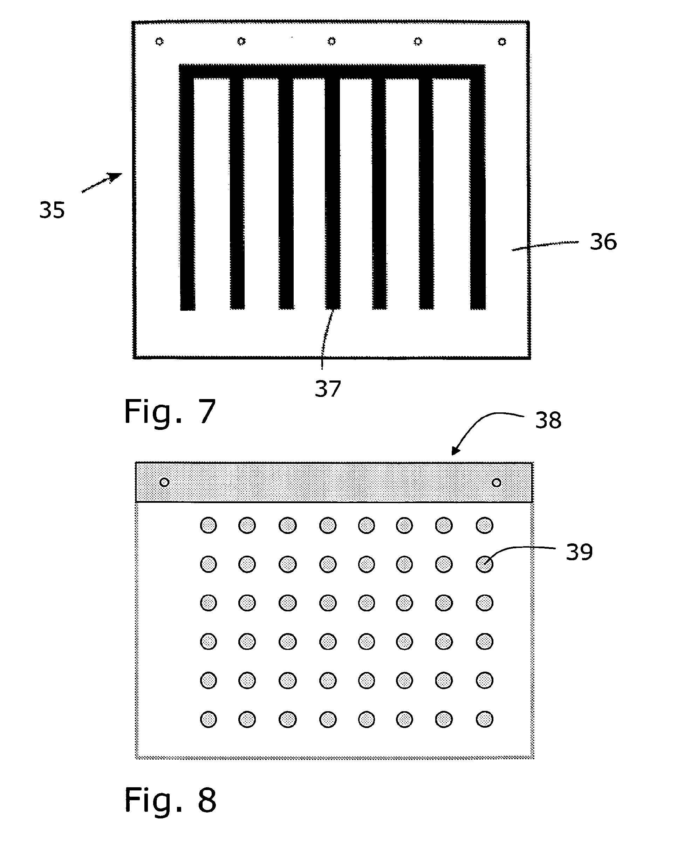

Fig. 5 illustrates the blank 25 arranged on a floor 26 e.g. of a box, cage or similar confined space, or in the floor of a passage where access is prohibited. The blank comprises a second layer 27 and a first layer 28. The second layer faces upwards so that an animal will get an electrical shock if "trespassing" over the blank. The electrical effect requires that the living being is connected to the ground. To improve the effect, the outer surface of the second layer may therefore comprise areas which carry the electrical charge and areas which are connected to earth. Various patterns are illustrated in Figs. 7 and 8. The blank 25 is connected to the energizer 29 via the cable 30. The energizer is connected to earth via the cable 31 and to a power supply 32 via the cable 33. In this case, the power supply is constituted by a battery. In the disclosed embodiment, the blank 25 comprises surface areas which are connected to earth via the cable 34. If the living being simultaneously touches one surface area which carries the electrical charge and one surface area which is connected to ground, an unpleasant current will run through the body of the living being.

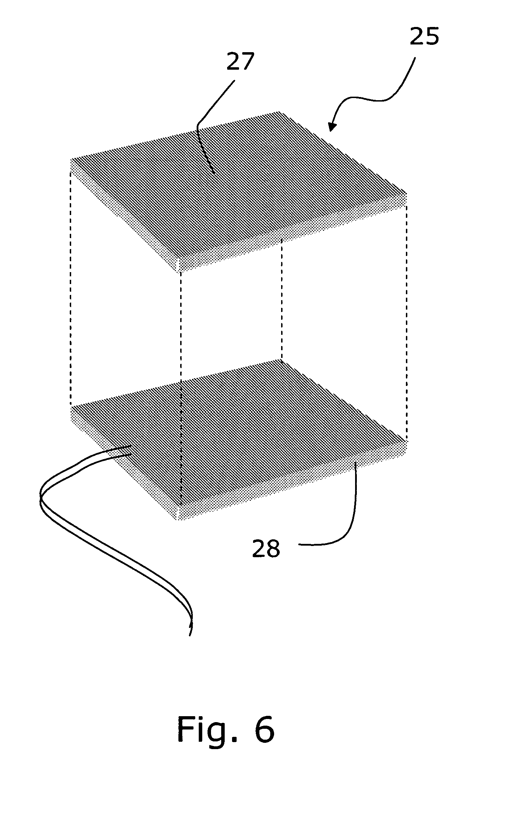

Fig. 6 illustrates the blank 25 in an exploded view in which it can be seen that the second layer and the first layer are individual layers which are assembled adhesively.

Fig. 7 illustrates a blank 35 made of rubber or a rubber or plastic-like material. The front side 36 of the blank 25 has a pattern of connected strips 37 of an electrically conductive material such as a metal foil or the like. In this case, the connected strips constitute the second layer of the layered structure.

Fig. 8 illustrates yet another pattern provided on an outer surface of the blank 38. In this case, the outer surface comprises a plurality of circular fields 39 of an electrically conductive material (any shape of the fields may be envisaged). The fields are either all charged with an electrical charge, or they are grouped in two groups, one group of fields being charged with an electrical charge and one group of fields being connected to ground.

In this way, the electrical circuit will be short circuited through the body of the living being from a field of one group of fields to a field of the other group of fields, e.g. neighbouring fields.

Similarly, the embodiment in Figs. 5 and 6 could be made with first and second electrically conductive elements separated from each other.

## Claims

1. A device for affecting a behaviour of a living being, the device comprising a blank of a sheet material suitable for being arranged in an area in which the behaviour is practised by the individual, the blank having a layered structure with an electrically isolating first layer and an electrically conductive second layer, **characterised in that** the blank is mounted in a wall bracket, which supports suspension of the blank on a wall.

2. A device according to claim 1, wherein the wall bracket is adapted to maintain the upper area of the blank at a distance from the wall.

3. A device according to claim 1 or 2, wherein the electrically conductive second layer forms an outer surface on which an electrical charge can be evenly distributed.

4. A device according to claim 3, wherein the outer surface forms a surface structure including protrusions extending from an essentially plane surface.

5. A device according to any of the preceding claims, wherein the second layer is adapted to carry the electrical charge in a continuous manner so that destruction of a part of the second layer does not affect the capability of the other parts to be electrically charged.

6. A device according to any of the preceding claims, wherein in that the blank comprises an elastically deformable material.

7. A device according to any of the preceding claims, wherein the blank comprises at least one additional electrically conductive layer, the additional electrically conductive layer being adapted to carry a charge different from that of the second layer.

8. A device according to any of the preceding claims, wherein the blank has an outer surface comprising at least two surface portions formed by different one of the second layer and additional layers and an opposite inner surface comprising a surface portion formed by the first layer.

9. A device according to any one of the preceding claims, further comprising an energizer adapted to generate high voltage impulses between a first and a second output terminal, wherein the first output terminal is electrically connected to the second layer, and wherein the second output terminal is connected to ground.

10. A cage comprising a device according to any of the preceding claims.

11. A method of affecting a behaviour of an animal, the method comprising the step of providing a blank of a sheet material which has capability to carry an electrical charge, arranging the blank in a habitation of the living being, and connecting the blank to an energizer for providing an electrically charged surface of the blank, **characterised in that** the blank is arranged on a wall in a cage for the animal.

12. A method according to claim 11, wherein the blank is arranged below a feeding trough at a distance from a wall on which the feeding trough is mounted.

13. A method according to claim 11, wherein the blank is arranged in a transport cage for transport of an animal.

## Patentansprüche

1. Vorrichtung zum Beeinflussen eines Verhaltens eines Lebewesens, wobei die Vorrichtung einen Zuschnitt aus einem bahnförmigen Material aufweist, der dazu eingerichtet ist, in einem Bereich angeordnet zu sein, in dem das Verhalten durch das Wesen ausgeübt wird, wobei der Zuschnitt eine geschichtete Struktur mit einer elektrisch isolierenden ersten Schicht und einer elektrisch leitfähigen zweiten Schicht aufweist, **dadurch gekennzeichnet, dass** der Zuschnitt an einer Wandhalterung angebracht ist, die eine Aufhängung des Zuschnitts an einer Wand unterstützt.

2. Vorrichtung nach Anspruch 1, bei der die Wandhalterung dazu eingerichtet ist, den oberen Bereich des Zuschnitts in einem Abstand von der Wand zu halten.

3. Vorrichtung nach Anspruch 1 oder 2, bei der die elektrisch leitfähige zweite Schicht eine Außenfläche bildet, auf der eine elektrische Ladung gleichmäßig verteilbar ist.

4. Vorrichtung nach Anspruch 3, bei der die Außenfläche eine Oberflächenstruktur bildet, die sich von einer im Wesentlichen planen Oberfläche weg erstreckende Vorsprünge aufweist.

5. Vorrichtung nach einem der vorangehenden Ansprüche, bei der die zweite Schicht dazu eingerichtet ist, die elektrische Ladung andauernd zu tragen, so dass sich die Zerstörung eines Teils der zweiten Schicht nicht auf die Fähigkeit anderer Teile auswirkt, elektrisch geladen zu werden.

6. Vorrichtung nach einem der vorangehenden Ansprüche, bei der der Zuschnitt ein elastisch verformbares Material aufweist.

7. Vorrichtung nach einem der vorangehenden Ansprüche, bei der der Zuschnitt wenigstens eine zusätzliche elektrisch leitfähige Schicht aufweist, wobei die zusätzliche elektrisch leitfähige Schicht dazu eingerichtet ist, eine von der Ladung der zweiten Schicht verschiedene Ladung zu tragen.

8. Vorrichtung nach einem der vorangehenden Ansprüche, bei der der Zuschnitt eine Außenfläche, die über wenigstens zwei Oberflächenabschnitte verfügt, die von der zweiten Schicht und zusätzlichen Schichten verschieden ausgebildet sind, sowie eine gegenüber liegende Innenfläche mit einem Oberflächenabschnitt aufweist, der durch die erste Schicht gebildet ist.

9. Vorrichtung nach einem der vorangehenden Ansprüche, die weiterhin eine Energiezuführeinheit aufweist, die dazu eingerichtet ist, Hochspannungsimpulse zwischen einem ersten und einem zweiten Ausgangsanschluss zu erzeugen, wobei der erste Ausgangsanschluss mit der zweiten Schicht elektrisch verbunden ist und wobei der zweite Ausgangsanschluss mit Erde verbunden ist.

10. Käfig, der eine Vorrichtung nach einem der vorangehenden Ansprüche aufweist.

11. Verfahren zum Beeinflussen eines Verhaltens eines Tiers, wobei das Verfahren den Schritt des Bereitstellens eines Zuschnitts aus einem bahnförmigen Material, das fähig ist, eine elektrische Ladung zu tragen, des Anordnens des Zuschnitts in einer Behausung des Lebewesens und des Verbindens des Zuschnitts mit einer Energiezuführeinheit aufweist, um eine elektrisch geladene Oberfläche des Zuschnitts zu schaffen, **dadurch gekennzeichnet, dass** der Zuschnitt an einer Wand in einem Käfig des Tiers angeordnet ist.

12. Verfahren nach Anspruch 11, bei dem der Zuschnitt unterhalb eines Futtertrogs in einem Abstand von einer Wand angeordnet ist, an der der Futtertrog angebracht ist.

13. Verfahren nach Anspruch 11, bei dem der Zuschnitt in einem Transportkäfig für den Transport eines Tiers angeordnet ist.

## Revendications

1. Un dispositif pour affecter un comportement d'un être vivant, le dispositif comprenant une bâche d'un matériau en feuille apte à être disposée dans une zone dans laquelle le comportement est pratiqué par l'individu, la bâche ayant une structure en couches avec une première couche électriquement isolante et une seconde couche électriquement conductrice, **caractérisé en ce que** la bâche est montée sur un support mural prenant en charge la suspension de la bâche sur un mur.

2. Un dispositif selon la revendication 1, dans lequel le support mural est adapté pour maintenir la zone supérieure de la bâche à une distance du mur.

3. Un dispositif selon la revendication 1 ou 2, dans lequel la seconde couche électriquement conductrice forme une surface externe sur laquelle une charge électrique peut être uniformément répartie.

4. Un dispositif selon la revendication 3, dans lequel la surface externe forme une structure de surface comportant des protubérances s'étendant à partir d'une surface essentiellement plane.

5. Un dispositif selon l'une quelconque des revendications précédentes, dans lequel la seconde couche est adaptée pour porter la charge électrique de manière continue de sorte qu'une destruction d'une partie de la seconde couche n'affecte pas la capacité des autres parties d'être chargées électriquement.

6. Un dispositif selon l'une quelconque des revendications précédentes, dans lequel la bâche comprend un matériau élastique déformable.

7. Un dispositif selon l'une quelconque des revendications précédentes, dans lequel la bâche comprend au moins une couche additionnelle électriquement conductrice, la couche additionnelle électriquement conductrice étant adaptée pour porter une charge différente de celle de la seconde couche.

8. Un dispositif selon l'une quelconque des revendications précédentes, dans lequel la bâche a une surface externe comprenant au moins deux portions de surface formées par une couche différente de la seconde couche et des couches additionnelles et une surface interne opposée comprenant une portion de surface formée par la première couche.

9. Un dispositif selon l'une quelconque des revendications précédentes, comprenant de plus un générateur d'énergie adapté pour générer des impulsions de haute tension entre une première et une seconde borne de sortie, dans lequel la première borne de sortie est connectée électriquement à la seconde couche, et dans lequel la seconde borne de sortie est connectée à la terre.

10. Une cage comprenant le dispositif selon l'une quelconque des revendications précédentes.

11. Une méthode pour affecter un comportement d'un animal, la méthode comprenant les étapes de fourniture d'une bâche d'un matériau en feuille ayant la capacité de porter une charge électrique, disposition de la bâche dans une habitation de l'être vivant et connexion de la bâche à un générateur d'énergie pour fournir une surface électriquement chargée à la bâche, **caractérisée en ce que** la bâche est disposée sur une paroi dans une cage pour l'animal.

12. Une méthode selon la revendication 11, dans laquelle la bâche est disposée en dessous d'une auge à une distance d'une paroi sur laquelle l'auge est montée.

13. Une méthode selon la revendication 11, dans laquelle la bâche est disposée dans une cage de transport d'un animal.
